# EUROPEAN PATENT APPLICATION

(11) **EP 4 117 079 A1**
(43) Date of publication of application: **11.01.2023**
(21) Application number: 20923032.5
(22) Date of filing: 15.12.2020
(51) Int. Cl.: H01M 10/42, H01M 10/04, H01M 10/0587, H01M 50/531

(54) **SECONDARY BATTERY**

(30) Priority: 05.03.2020 KR 20200027733
(71) Applicant: Samsung SDI Co., Ltd., Yongin-si, Gyeonggi-do 17084 (KR)
(72) Inventor: LEE, Ji Ho, Yongin-si, Gyeonggi-do 17084 (KR); KIM, Dong Han, Yongin-si, Gyeonggi-do 17084 (KR); YANG, Chun Mo, Yongin-si, Gyeonggi-do 17084 (KR)
(74) Representative: Gulde & Partner
(86) International application number: PCT/KR2020/018313
(87) International publication number: WO 2021/177561

(57) **Abstract**

The present invention relates to a secondary battery wherein a coating layer is formed by coating the surface of the outermost separator of an electrode assembly with a heat-resistant material, thereby preventing heat generated by abnormal heating of a battery cell from being transferred to the outside through a case or preventing external heat from being transferred to the inside of the battery cell. For example, the present invention provides a secondary battery comprising: an electrode assembly comprising a first electrode plate, a second electrode plate, and a separator interposed between the first electrode plate and the second electrode plate, wherein a first electrode tab that is a non-coated portion of the first electrode plate protrudes in one direction; a case in which the electrode assembly is received; a cap plate for sealing the upper end portion of the case; and a first terminal part electrically connected to the first electrode plate of the electrode assembly, the first terminal part being exposed to the outside of the cap plate. The separator is positioned at the outermost part of the electrode assembly, and a coating layer is formed by coating the surface of the outermost separator with a heat-resistant material.

## Description

### TECHNICAL FIELD

Various embodiments of the present invention relate to a secondary battery.

### BACKGROUND ART

A secondary battery is a power storage system that provides excellent energy density for storing electrical energy in the form of chemical energy. Compared to non-rechargeable primary batteries, secondary batteries are rechargeable and are widely used in IT devices such as smartphones, cellular phones, laptops, and tablet PCs. Recently, in order to prevent environmental pollution, interest in electric vehicles has increased, and high-capacity secondary batteries are being adopted for electric vehicles accordingly. Such secondary batteries are required to have characteristics such as high density, high output, and stability.

The above information disclosed in this Background section is only for enhancement of understanding of the background of the invention and therefore it may contain information that does not constitute prior art.

### DESCRIPTION OF EMBODIMENTS

### TECHNICAL PROBLEM

The present invention provides a secondary battery wherein a coating layer is formed by coating the surface of the outermost separator of an electrode assembly with a heat-resistant material, thereby preventing heat generated by abnormal heating of a battery cell from being transferred to the outside through a case or preventing external heat from being transferred to the inside of the battery cell.

### SOLUTION TO PROBLEM

A secondary battery according to an embodiment of the present invention comprises: an electrode assembly comprising a first electrode plate, a second electrode plate, and a separator interposed between the first electrode plate and the second electrode plate, wherein a first electrode tab that is a non-coated portion of the first electrode plate protrudes in one direction; a case in which the electrode assembly is received; a cap plate for sealing the upper end portion of the case; and a first terminal part electrically connected to the first electrode plate of the electrode assembly, the first terminal part being exposed to the outside of the cap plate, the separator is positioned at the outermost part of the electrode assembly, and a coating layer is formed by coating the surface of the outermost separator with a heat-resistant material.

The electrode assembly may be formed by winding a stack of the first electrode plate, the separator, and the second electrode plate in the shape of a jelly roll, and the second electrode tab that is a non-coated portion of the second electrode plate may protrude in the other direction opposite to the first electrode tab.

The electrode assembly may be formed in a stack form in which the first electrode plate, the separator, the second electrode plate, and the separator are sequentially stacked, and the second electrode tab that is a non-coated portion of the second electrode plate may protrude in the other direction opposite to the first electrode tab.

The coating layer may be coated to cover all the outer surfaces of the separator, and the first electrode tab and the second electrode tab may protrude from the coating layer to both sides in the longitudinal direction of the electrode assembly, respectively.

The coating layer may be formed such that a plurality of holes are disposed in a dot array or matrix form, and the separator may be exposed to the outside through the plurality of holes.

The coating layer may be coated to cover the separator positioned on the long side of the electrode assembly, and the separator may be exposed to the outside through the upper and lower surfaces of the electrode assembly.

The coating layer may be formed such that a plurality of holes are arranged in a dot array or matrix form, and the separator may be exposed to the outside through the plurality of holes.

The coating layer may be coated on the inner surface of the outermost separator.

The first electrode tab may be connected to a first current collector plate accommodated inside the case at the first terminal part, and the second electrode tab may be connected to a second current collector plate accommodated inside the case at the second terminal part exposed to the outside of the cap plate.

The coating layer may be coated to cover a fixing tape for fixing the outermost separator to the outermost surface of the electrode assembly and the first and second current collector plates.

The separator may be a porous film including at least one selected from the group consisting of polystyrene (PS), polyethylene (PE), polypropylene (PP), polyvinylidene fluoride (PVdF), polytetrafluoroethylene (PTFE), polyurethane (PU), polymethylpentene (PMP), polyethylene terephthalate (PET), polycarbonate (PC), polyester, polyvinyl alcohol (PVA), polyacrylonitrile (PAN), silicone acrylic rubber, ethylene-methyl acrylate copolymer, polymethylene oxide (PMO), polymethyl methacrylate (PMMA), polyethylene oxide (PEO), polyamide (PA), polyamideimide (PAI), polysulfone (PSF), polyethylsulfone (PES), polyphenylene sulfide (PPS), polyarylate (PAR), polyimide (PI), polyaramid (PA), cellulose (cellulose), modified cellulose, a melamine-based resin, and a phenol-based resin.

The coating layer is a single substance or a mixture of two or more selected from the group consisting of polyimide, polybutylene terephthalate (PBT), polyamideimide (PAI), perfluoroalkoxy (PFA), polysulfone (PSF), polyarylsulfone (PAS), polytetrafluoroethylene (PTFE), fluorinated ethylene propylene (FEP), ethylene tetrafluoroethylene (ETFE), and polyethylene naphthalene (PEN), which are liquid polymer materials having strong heat resistance.

### ADVANTAGEOUS EFFECTS OF DISCLOSURE

In the secondary battery according to an embodiment of the present invention, a coating layer of a heat-resistant material is coated on the surface of the outermost separator of an electrode assembly with a heat-resistant material, thereby preventing heat generated by abnormal heating of a battery cell from being transferred to the outside through a case or preventing external heat from being transferred to the inside of the battery cell.

### BRIEF DESCRIPTION OF DRAWINGS

FIG. 1 is a perspective view illustrating a secondary battery according to various embodiments of the present invention.
FIG. 2 is a cross-sectional view taken along line 2-2 of the secondary battery shown in FIG. 1.
FIGS. 3A to 3C are examples of an exploded perspective view, a perspective view, and a cross-sectional view of a portion of an electrode assembly in the secondary battery shown in FIG. 1.
FIG. 4 is a perspective view illustrating another example of a coating layer in the electrode assembly shown in FIG. 3B.
FIG. 5 is a perspective view illustrating another example of a coating layer in the electrode assembly shown in FIG. 3B.
FIG. 6 is a perspective view illustrating another example of a coating layer in the electrode assembly shown in FIG. 3B.
FIG. 7 is a perspective view illustrating the configuration of the secondary battery shown in FIG. 1 before being accommodated in a case.
FIG. 8 is a perspective view illustrating a secondary battery according to another embodiment of the present invention before being accommodated in a case.
FIG. 9 shows another example of a perspective view of an electrode assembly in the secondary battery shown in FIG. 1.

### BEST MODE

Hereinafter, preferred embodiments of the present invention will be described in detail with reference to the accompanying drawings.

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this disclosure will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

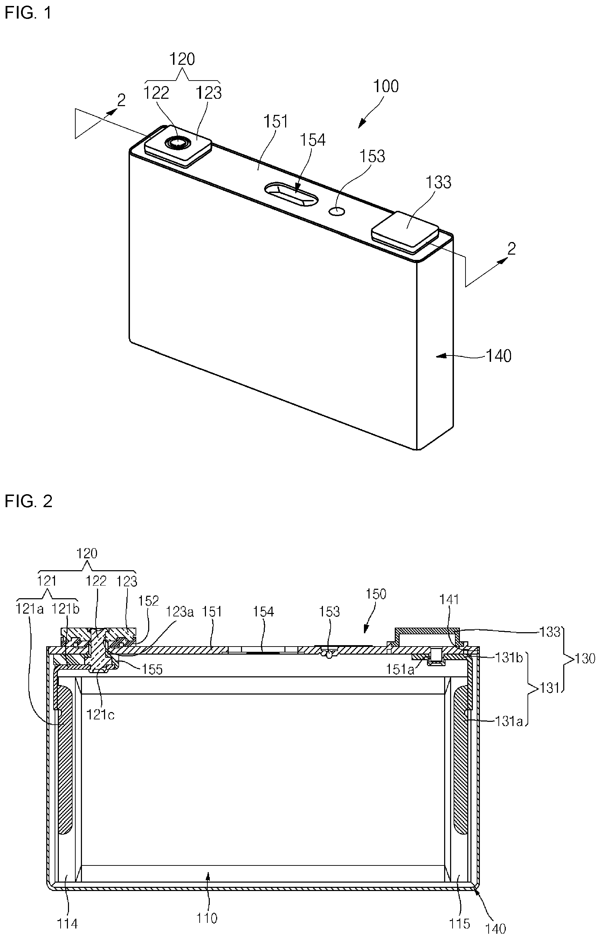

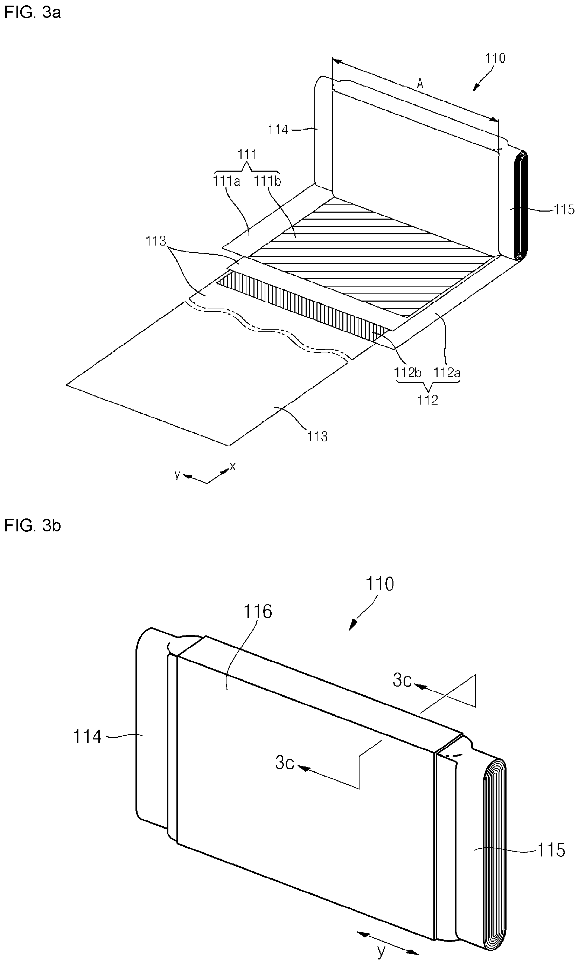

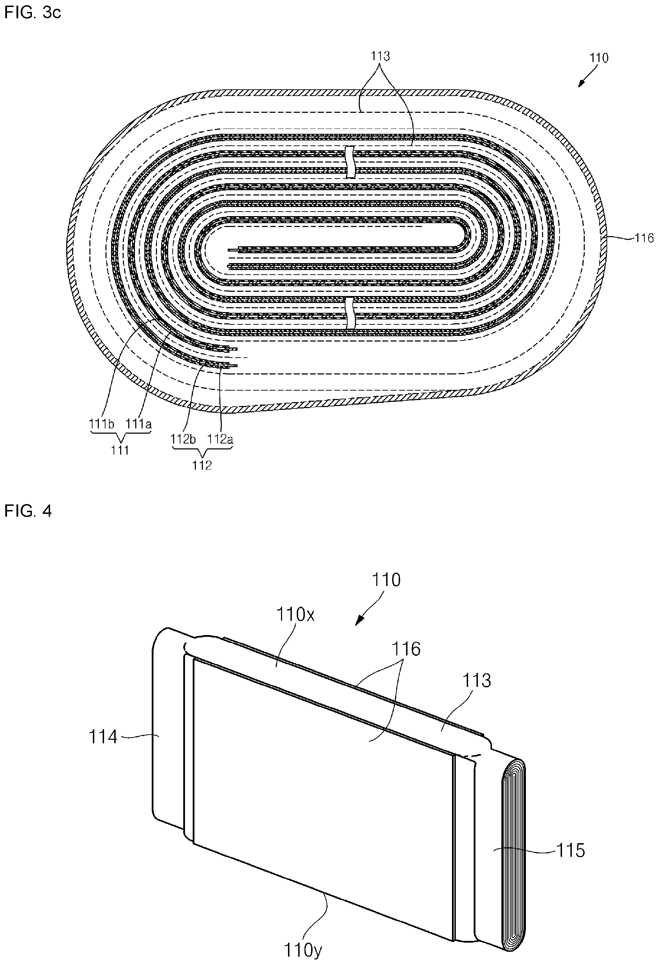

Referring to FIG. 1, a perspective view illustrating a secondary battery according to various embodiments of the present invention is shown. Referring to FIG. 2, a cross-sectional view taken along line 2-2 of the secondary battery shown in FIG. 1 is shown. In addition, referring to FIGS. 3A to 3C, an exploded perspective view, a perspective view, and a cross-sectional view of a portion of an electrode assembly in the secondary battery shown in FIG. 1 are shown. Hereinafter, the secondary battery 100 of the present invention will be described with reference to FIGS. 1, 2, 3A and 3B.

As shown in FIGS. 1, 2, 3A and 3B, the secondary battery 100 includes an electrode assembly 110, a first terminal part 120, a second terminal part 130, a case 140, and a cap assembly 150. Here, the cap assembly 150 may include a cap plate 151 sealing an upper opening 141 of the case 140.

First, the electrode assembly 110 may be formed by winding a stack of a first electrode plate, a separator, and a second electrode plate, which are formed as thin plates or films, in the shape of a jelly roll. In addition, a coating layer 116 may be further formed on the outermost surface of the jelly-roll shaped electrode assembly 110.

Here, the first electrode plate 111 may operate as a negative electrode and the second electrode plate 112 may operate as a positive electrode, and on the contrary, the first electrode plate 111 may operate as a positive electrode and the second electrode plate 112 may operate as a negative electrode. However, in the present invention, for convenience of explanation, explanations will be given assuming that the first electrode plate 111 operates as a negative electrode and the second electrode plate 112 operates as a positive electrode as an example.

The first electrode plate 111 is formed by coating a first electrode active material 111b, such as graphite or carbon, on a first electrode current collector 111a made of a metal foil, such as copper, a copper alloy, nickel, or a nickel alloy, and may include a first electrode tab 114 (or a first uncoated portion) that is a region to which the first electrode active material is not applied. The first electrode tab 114 serves as a passage for current flow between the first electrode plate 111 and a first current collector tab 121. Here, as shown in FIGS. 3A and 3B, the first electrode tab 114 may protrude and extend a predetermined length toward one side of the electrode assembly 110.

The second electrode plate 112 is formed by coating a second electrode active material 112b, such as a transition metal oxide, on a second electrode current collector 112a made of a metal foil, such as aluminum or an aluminum alloy, and may include a second electrode tab 115 (or a second uncoated portion) that is a region to which the second electrode active material 112b is not applied. The second electrode tab 115 serves as a passage for current flow between the second electrode plate 112 and a second current collector tab 131. Here, as shown in FIGS. 3A and 3B, the second electrode tab 115 may protrude and extend a predetermined length to the other side of the electrode assembly 110. That is, in the electrode assembly 110, the first electrode tab 114 and the second electrode tab 115 may protrude and extend to both sides in the longitudinal direction y, respectively.

The separator 113 may be interposed between the first electrode plate 111 and the second electrode plate 112 to prevent an electric short and to enable movement of lithium ions. The separator 113 may extend further in the winding direction (x) than the first electrode plate 111 and the second electrode plate 112, so that the separator 113 may be positioned at the outermost portion of the electrode assembly 110. For example, the separator 113 may be additionally further wound on the outermost surface of the electrode assembly 110 at least once, compared to the first electrode plate 111 and the second electrode plate 112. Of course, the separator 113 may expose the first electrode tab 114 and the second electrode tab 115 to the outside. The separator 113 may be formed at the central region A in the longitudinal direction y of the electrode assembly 110. That is, in the electrode assembly 110, the first electrode tab 114, the separator 113, and the second electrode tab 115 may be sequentially positioned along the longitudinal direction y.

The separator 113 may be formed of a porous film including at least one selected from the group consisting of polystyrene (PS), polyethylene (PE), polypropylene (PP), polyvinylidene fluoride (PVdF), polytetrafluoroethylene (PTFE), polyurethane (PU), polymethylpentene (PMP), polyethylene terephthalate (PET), polycarbonate (PC), polyester, polyvinyl alcohol (PVA), polyacrylonitrile (PAN), silicone acrylic rubber, ethylene-methyl acrylate copolymer, polymethylene oxide (PMO), polymethyl methacrylate (PMMA), polyethylene oxide (PEO), polyamide (PA), polyamideimide (PAI), polysulfone (PSF), polyethylsulfone (PES), polyphenylene sulfide (PPS), polyarylate (PAR), polyimide (PI), polyaramid (PA), cellulose, modified cellulose, melamine-based resin, and phenol-based resin.

In addition, after the winding of the electrode assembly 110 is completed, a coating layer 116 made of a heat-resistant material may be further formed on the surface of the outermost separator 113. That is, the coating layer 116 may be coated to cover the outer surface of the separator 113. Of course, in this case, the first electrode tab 114 and the second electrode tab 115 may be exposed to the outside of the coating layer 116. That is, in the electrode assembly 110, the first electrode tab 114 and the second electrode tab 115 may protrude from the coating layer 116 to both sides in the longitudinal direction of the electrode assembly 110, respectively.

Here, the coating layer 116 may include a single substance or a mixture of two or more selected from the group consisting of polyimide, polybutylene terephthalate (PBT), polyamideimide (PAI), perfluoroalkoxy (PFA), polysulfone (PSF), polyarylsulfone (PAS), polytetrafluoroethylene (PTFE), fluorinated ethylene propylene (FEP), ethylene tetrafluoroethylene (ETFE), and polyethylene naphthalene (PEN), which are liquid polymer materials having strong heat resistance. The coating layer 116 may be formed by spray coating, but the present invention is not limited thereto.

The coating layer 116 is made of a heat-resistant material, and thus can prevent abnormal heat generation of the battery cell 110 from being transmitted to the outside through the case 140. Of course, the coating layer 116 may also prevent external heat from being transferred to the inside of the battery cell 110 through the case 140. In addition, since the coating layer 116 is made of an insulating material, insulation between the electrode assembly 110 and the case 140 may be improved. Of course, since the coating layer 116 is made of an insulating material, a separate insulating tape may not be provided at the outermost portion of the electrode assembly 110.

As another example, as shown in FIG. 4, the coating layer 116 may expose the separator 113 of the upper surface 110x and the lower surface 110y of the electrode assembly 110 to the outside. That is, the coating layer 116 may be formed to cover only the long side of the electrode assembly 110. Of course, the coating layer 116 may be formed to cover the separator 113 on the long side of the electrode assembly 110. The coating layer 116 may be formed to cover only the central region A on the long side of the electrode assembly 110. Here, when the coating layer 116 is formed to cover only the central region A of the long side of the electrode assembly 110, an electrolyte solution may be more easily absorbed into the electrode assembly 110.

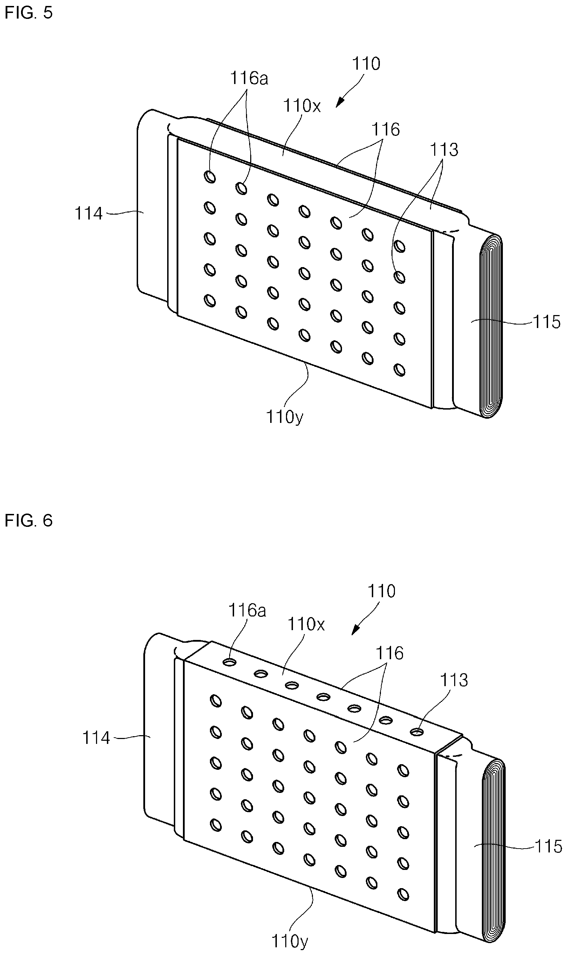

Additionally, as shown in FIG. 5, the coating layer 116 may have a plurality of holes 116a to partially expose the separator 113 on the long side of the electrode assembly 110 to the outside. Here, the holes 116a may be arranged in a dot array form or a matrix form. Also, although each of the holes 116a is shown to have a circular shape, the shape may be changed in various manners including a polygonal shape, etc. Additionally, the coating layer 116 may also expose the separator 113 of each of the upper surface 110x and the lower surface 110y of the electrode assembly 110 to the outside.

Additionally, as shown in FIG. 6, a plurality of holes 116a may be provided in the coating layer 116 in a form in which the coating layer 116 covers all of the central region A of the electrode assembly 110. In this case, the holes 116a may partially expose to the outside the separator 113 on the long side, the upper surface, and the lower surface of the electrode assembly 110. Here, when the holes 116a include a plurality of holes, they may be arranged in a dot array form or a matrix form. Of course, although each of the holes 116a is illustrated in a circular shape, the shape may be changed in various manners, including a polygonal shape or the like.

As described above, by additionally forming the holes 116a in the coating layer 116, the electrolyte solution may be more easily absorbed into the electrode assembly 110.

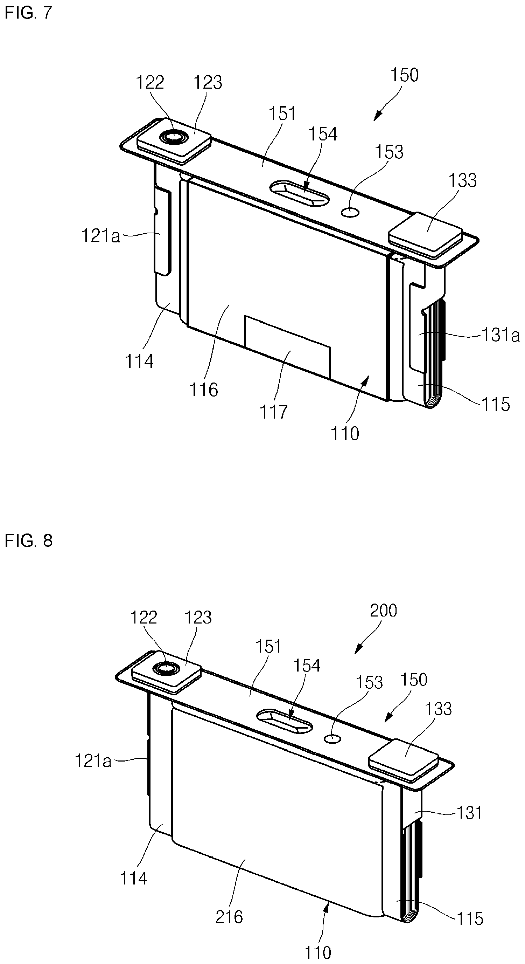

As shown in FIG. 7, in the electrode assembly 110, after the outermost separator 113 is fixed by means of a fixing tape 117, the first electrode tab 114 and the second electrode tab 115 may be electrically connected respectively to the first electrode connection part 121a of the first current collector plate 121 and the second electrode connection part 121a of the second current collector plate 131, which are fixed to the cap assembly 150, by welding.

The electrode assembly 110 is accommodated in the case 140 together with an electrolyte. The electrolyte may include a lithium salt, such as LiPF6 or LiBF4 in an organic solvent, such as EC, PC, DEC, EMC, or DMC. In addition, the electrolyte may be in a liquid, solid or gel form.

The first terminal part 120 is made of metal, and is electrically connected to the first electrode tab 114 of the first electrode plate 111. The first terminal part 120 includes the first current collector plate 121, a terminal pole 122, and a terminal plate 123. Here, the terminal pole 122 is electrically/mechanically connected between the first current collector plate 121 and the terminal plate 123.

The first current collector plate 121 includes a first electrode connection part 121a that is in contact with and welded to the first electrode tab 114 of the first electrode plate 112, and a first terminal connection part 121b that is bent and extended from an upper end of the first electrode connection part 121 and is electrically and mechanically connected to the terminal pole 122. The first terminal connection part 121b includes a terminal hole 121c penetrating between the upper and lower surfaces thereof, and the terminal pole 122 is inserted thereinto to be riveted or welded. The first current collector plate 121 is made of, for example, copper or a copper alloy. However, the first current collector plate 121 is not limited to these materials.

The terminal pole 122 protrudes and extends upward a predetermined length through the cap plate 151 to be described later, and is electrically connected to the first current collector plate 121 under the cap plate 151. In addition, the terminal pole 122 protrudes and extends a predetermined length to the upper portion of the cap plate 151, and is inserted into the terminal hole 121a of the first current collector plate 121 from the lower portion of the cap plate 151 to then be riveted or welded. Here, the terminal pole 122 is electrically insulated from the cap plate 151.

The terminal plate 123 has a hole 123a penetrating between the upper surface and the lower surface, and the terminal pole 122 is coupled and welded to the hole 123a. The terminal plate 123 may be coupled to the terminal pole 122 at an upper portion of the cap plate 151. For example, a laser beam may be provided to a boundary region between the terminal pole 122 and the terminal plate 123 exposed upward, and the boundary region may be melted and then cooled and welded.

The second terminal part 130 is also made of metal, and is electrically connected to the second electrode tab 115 of the second electrode plate 111. The second terminal part 130 may include a second current collector plate 131 and a terminal region 132. The second current collector plate 131 includes a second electrode connection part 131a that is in contact with and welded to the second electrode tab 115 of the second electrode plate 112, and a second terminal connection part 131b that is bent and extended from the upper end of the second electrode connection part 131 and is electrically and mechanically connected to a protrusion 151a of the cap plate 151. The second terminal connection part 131b has a terminal hole 131c penetrating between the upper and lower surfaces thereof, and the protrusion 151a is fitted and welded thereto. The second current collector plate 131 may be made of, for example, aluminum or an aluminum alloy. However, the second current collector plate 131 is not limited to these materials.

The terminal region 133 may protrude upward from the cap plate 151. The terminal region 133 may be formed by a forging process when the cap plate 151 is formed, or may be formed by welding a separate metal plate. When the terminal region 133 is formed of a separate metal plate, it may be electrically and mechanically coupled to the upper surface of the cap plate 151.

In addition, the terminal region 133 may be formed of aluminum or an aluminum alloy, which is the same as the cap plate 151. Here, the terminal region 132 is electrically connected to the cap plate 151, the cap plate 151 and the case 140 to be described below have the same polarity as the second terminal part 130 (e.g., a positive polarity). Of course, accordingly, the second terminal part 130 may serve as a positive electrode terminal.

The case 140 is made of aluminum, an aluminum alloy, or a conductive metal, such as nickel-plated steel, and has a substantially hexahedral shape in which an opening 141 into which the electrode assembly 110 can be inserted and seated is formed. FIG. 2 shows a state in which the case 140 and the cap assembly 150 are coupled to each other, and the opening 141 of the case 140 may correspond to a peripheral portion coupled to the cap assembly 150. Meanwhile, the inner surface of the case 140 may be insulated to be insulated from the electrode assembly 110, the first terminal 120, the second terminal 130, and the cap assembly 150.

The cap assembly 150 is coupled to the case 140. The cap assembly 150 specifically includes a cap plate 151, an upper insulating member 152, a plug 153, a safety vent 154, and a lower insulating member 155.

The cap plate 151 may seal the opening of the case 140, and may be formed of the same material as the case 140. For example, the cap plate 151 may be coupled to the case 140 by laser welding. Here, the cap plate 151 may have the same polarity as that of the second terminal part 130. Also, the cap plate 151 and the welded case 140 may have the same polarity.

The upper insulating member 152 is formed between the terminal plate 123 and the cap plate 151. In addition, the upper insulating member 152 is in close contact with the cap plate 151 and the terminal plate 123. The upper insulating member 152 insulates the cap plate 151 and the terminal plate 123 from each other.

The plug 153 seals an electrolyte injection hole of the cap plate 151, the safety vent 154 is installed in a vent hole of the cap plate 151, and a notch is formed so as to be opened at a set pressure.

The lower insulating member 155 may be interposed between the first current collector plate 121 and the cap plate 151 and between the cap plate 151 and the terminal pole 122. The lower insulating member 155 may prevent external moisture from penetrating the inside of the secondary battery 100 or prevent the electrolyte contained in the secondary battery 100 from leaking to the outside. Furthermore, the lower insulating member 155 may also be in close contact with the upper insulating member 152.

In addition, the lower insulating member 155 insulates the first current collector plate 121 and the cap plate 151 from each other, and the terminal pole 122 and the cap plate 151 from each other.

Referring to FIG. 8, a perspective view illustrating a secondary battery according to another embodiment of the present invention before being accommodated in a case is shown. The perspective view and the cross-sectional view of the secondary battery 200 may be the same as those of the secondary battery 100 shown in FIGS. 1 and 2. However, in the secondary battery 200, after the outermost separator 113 is fixed by means of a fixing tape 117, a first electrode tab 114 and a second electrode tab 115 may be welded respectively to a first electrode connection part 121a of a first current collector plate 121 and a second electrode connection part 131a of a second current collector plate 131, which are fixed to the cap assembly 150, and a coating layer 216 may then be formed. That is, the coating layer 216 may be coated to cover not only the electrode assembly 110 but also the first and second current collectors 121 and 131. In this case, the electrode assembly 110 may have a short side surface on which the first electrode tab 114 and the second electrode tab 115 are positioned to be exposed to the outside. Of course, the coating layer 216 may be formed to cover the fixing tape 117 as well.

The coating layer 216 may be formed to cover not only a central region A, in which the separator 113 is located on the long side of the electrode assembly 110, but also the first current collector plate 121 and the second current collector plate 131, which are coupled to the first electrode tab 114 and the second electrode tab 115. That is, the coating layer 216 may be formed to cover both of the long side surfaces of the electrode assembly 110. In addition, the coating layer 216 may be formed to cover both of the upper and lower surfaces of the electrode assembly 110.

In order to increase the absorption of an electrolyte by the electrode assembly 110, as shown in FIGS. 5 and 6, the coating layer 216 may have a hole formed to expose a part of the separator 113 of the electrode assembly 110 to the outside.

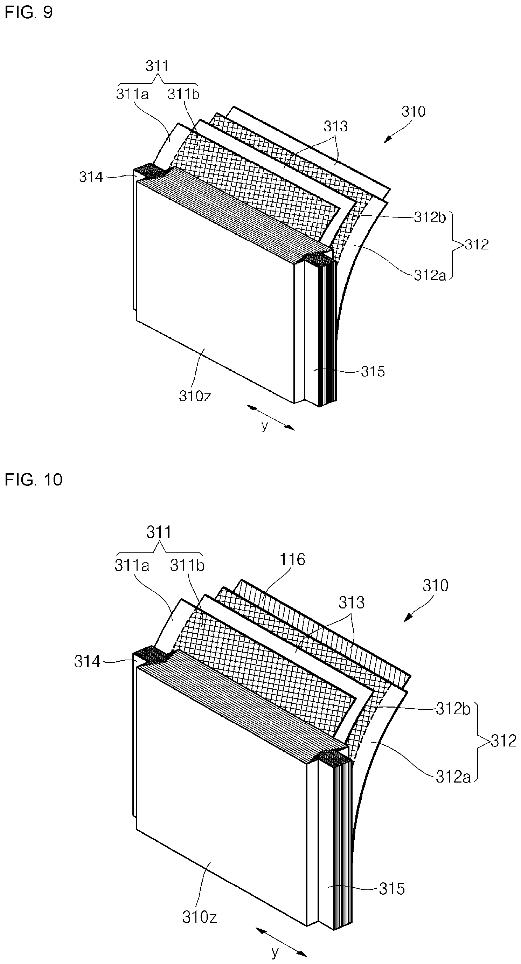

Referring to FIG. 9, another example of a perspective view of an electrode assembly in the secondary battery shown in FIG. 1 is shown.

The electrode assembly 310 may be formed in a stack form in which a first electrode plate 311, a second electrode plate 312, and a separator 313 between the first and second electrode plates 311 and 112 are sequentially stacked. That is, the electrode assembly 310 is not wound in the form of a jelly roll but is formed in the shape of a rectangular parallelepiped in which a square first electrode plate 311, a square separator 313, and a square second electrode plate 312, are sequentially stacked.

Here, the first electrode plate 311 may operate as a negative electrode and the second electrode plate 312 may operate as a positive electrode, and on the contrary, the first electrode plate 311 may operate as a positive electrode and the second electrode plate 312 may operate as a negative electrode. However, in the present invention, for convenience of explanation, explanations will be given assuming that the first electrode plate 311 operates as a negative electrode and the second electrode plate 312 operates as a positive electrode as an example.

The first electrode plate 311 is formed by coating a first electrode active material 311b, such as graphite or carbon, on a first electrode current collector 311a made of a metal foil, such as copper, a copper alloy, nickel, or a nickel alloy, and may include a first electrode tab 314 (or a first uncoated portion) that is a region to which the first electrode active material is not applied. The first electrode tab 314 serves as a passage for current flow between the first electrode plate 311 and a first current collector tab 121. Here, the first electrode tab 314 may protrude and extend a predetermined length toward one side of the electrode assembly 310.

The second electrode plate 312 is formed by coating a second electrode active material 312b, such as a transition metal oxide, on a second electrode current collector 312a made of a metal foil, such as aluminum or an aluminum alloy, and may include a second electrode tab 315 (or a second uncoated portion) that is a region to which the second electrode active material 312b is not applied. The second electrode tab 315 serves as a passage for current flow between the second electrode plate 312 and a second current collector tab 331. Here, the second electrode tab 315 may protrude and extend a predetermined length to the other side of the electrode assembly 310. That is, in the electrode assembly 310, the first electrode tab 314 and the second electrode tab 315 may protrude and extend to both sides in the longitudinal direction y, respectively.

The separator 313 may be interposed between the first electrode plate 311 and the second electrode plate 312 to prevent an electric short and to enable movement of lithium ions. The electrode assembly 310 may have a separator 313 positioned at the outermost portion. That is, the separator 313 may be positioned on the long side 310z of the electrode assembly 310.

The separator 313 may be formed at the central region A in the longitudinal direction y of the electrode assembly 310. That is, in the electrode assembly 310, the first electrode tab 314, the separator 313, and the second electrode tab 315 may be sequentially positioned along the longitudinal direction y when viewed from the long side. The material of the separator 313 may be the same as that of the electrode assembly 110 shown in FIGS. 3A to 3C.

Of course, in the electrode assembly 313, a coating layer 116 may be further formed on the outermost separator 313. Here, the shape of the coating layer 116 may be any one of the coating layers 116 shown in FIGS. 3B, 4, 5 and 6.

Additionally, as shown in FIG. 10, the coating layer 116 may be coated on the inner surface of the outermost separator 313. Of course, prior to coupling of the electrode assembly 310, the coating layer 116 may be coated on the inner surface of the outermost separator 313, and the electrode assembly 310 may then be coupled thereto. Here, the outermost separator 313 may be a separator positioned at the outermost portion of the electrode assembly 310. In addition, the inner surface of the outermost separator 313 may be a surface facing the first electrode plate 311 or the second electrode plate 312, not the outer surface exposed to the outside of the outermost separator 313.

Of course, a hole, which is the same as that formed in the coating layer 116 shown in FIG. 5, may be formed in the coating layer 116 coated on the inner surface of the outermost separator 313.

While the foregoing embodiment has been provided for carrying out the secondary battery according to the present invention, it should be understood that the embodiment described herein should be considered in a descriptive sense only and not for purposes of limitation, and various changes in form and details may be made therein without departing from the spirit and scope of the disclosure as defined by the following claims.

### INDUSTRIAL APPLICABILITY

The present invention can be applied to the field of a secondary battery and a battery pack composed of secondary batteries.

## Claims

1. A secondary battery comprising:
an electrode assembly comprising a first electrode plate, a second electrode plate, and a separator interposed between the first electrode plate and the second electrode plate, wherein a first electrode tab that is a non-coated portion of the first electrode plate protrudes in one direction;
a case in which the electrode assembly is received;
a cap plate for sealing the upper end portion of the case; and
a first terminal part electrically connected to the first electrode plate of the electrode assembly, the first terminal part being exposed to the outside of the cap plate,
wherein the separator is positioned at the outermost part of the electrode assembly, and a coating layer is formed by coating the surface of the outermost separator with a heat-resistant material.

2. The secondary battery of claim 1, wherein the electrode assembly is formed by winding a stack of the first electrode plate, the separator, and the second electrode plate in the shape of a jelly roll, and the second electrode tab that is a non-coated portion of the second electrode plate protrudes in the other direction opposite to the first electrode tab.

3. The secondary battery of claim 1, wherein the electrode assembly is formed in a stack form in which the first electrode plate, the separator, the second electrode plate, and the separator are sequentially stacked, and the second electrode tab that is a non-coated portion of the second electrode plate protrudes in the other direction opposite to the first electrode tab.

4. The secondary battery of claim 2 or 3, wherein the coating layer is coated to cover all the outer surfaces of the separator, and the first electrode tab and the second electrode tab protrude from the coating layer to both sides in the longitudinal direction of the electrode assembly, respectively.

5. The secondary battery of claim 4, wherein the coating layer is formed such that a plurality of holes are arranged in a dot array or matrix form, and the separator is exposed to the outside through the plurality of holes.

6. The secondary battery of claim 2, wherein the coating layer is coated to cover the separator positioned on the long side of the electrode assembly, and the separator is exposed to the outside through upper and lower surfaces of the electrode assembly.

7. The secondary battery of claim 6, wherein the coating layer is formed such that a plurality of holes are arranged in a dot array or matrix form, and the separator is exposed to the outside through the plurality of holes.

8. The secondary battery of claim 3, wherein the coating layer is coated on the inner surface of the outermost separator.

9. The secondary battery of claim 2, wherein the first electrode tab is connected to a first current collector plate accommodated inside the case at the first terminal part, and the second electrode tab is connected to a second current collector plate accommodated inside the case at the second terminal part exposed to the outside of the cap plate.

10. The secondary battery of claim 9, wherein the coating layer is coated to cover a fixing tape for fixing the outermost separator to the outermost surface of the electrode assembly, and the first and second current collector plates.

11. The secondary battery of claim 1, wherein the separator is a porous film including at least one selected from the group consisting of polystyrene (PS), polyethylene (PE), polypropylene (PP), polyvinylidene fluoride (PVdF), polytetrafluoroethylene (PTFE), polyurethane (PU), polymethylpentene (PMP), polyethylene terephthalate (PET), polycarbonate (PC), polyester, polyvinyl alcohol (PVA), polyacrylonitrile (PAN), silicone acrylic rubber, ethylene-methyl acrylate copolymer, polymethylene oxide (PMO), polymethyl methacrylate (PMMA), polyethylene oxide (PEO), polyamide (PA), polyamideimide (PAI), polysulfone (PSF), polyethylsulfone (PES), polyphenylene sulfide (PPS), polyarylate (PAR), polyimide (PI), polyaramid (PA), cellulose (cellulose), modified cellulose, a melamine-based resin, and a phenol-based resin.

12. The secondary battery of claim 1, wherein the coating layer is a single substance or a mixture of two or more selected from the group consisting of polyimide, polybutylene terephthalate (PBT), polyamideimide (PAI), perfluoroalkoxy (PFA), polysulfone (PSF), polyarylsulfone (PAS), polytetrafluoroethylene (PTFE), fluorinated ethylene propylene (FEP), ethylene tetrafluoroethylene (ETFE), and polyethylene naphthalene (PEN), which are liquid polymer materials having strong heat resistance.
